# EUROPEAN PATENT APPLICATION

(11) **EP 1 060 777 A1**
(43) Date of publication of application: **20.12.2000**
(21) Application number: 00111926.2
(22) Date of filing: 15.06.2000
(51) Int. Cl.: B01D 19/00

(54) **Equipment for degassing high viscosity substances**

(30) Priority: 16.06.1999 IT BO990326
(71) Applicant: T.M. di Tiziana Mazza, 40064 Ozzano Emilia (Bologna) (IT)
(72) Inventor: Baruffato, Simone, 40068 S. Lazzaro di Savena (Bologna) (IT); Baruffato, Roberto, 40068 S. Lazzaro di Savena (Bologna) (IT)
(74) Representative: Dall'Olio, Giancarlo

(57) **Abstract**

The equipment for degassing high viscosity substances, in particular lubricants such as oils and greases includes:
a cylindrical body (1b), which is hermetically closed by a respective head (1a) and by a respective support base (1c); a rotating drum (90) inserted into said cylindrical body (1b) and operated by a gear motor, on command of a control unit; conveying means, connected to said rotating drum (90), aimed at regulating the inflow and/or outflow of high viscosity substances (2) to and/or from said cylindrical body (1b); elastic stirring means (9), having reducible size, rotated by said drum (90), so as to free aeriform agglomerates from said high viscosity substances (2); a vacuum source aimed at removing the aeriform agglomerates released by said stirring means (9); a movable element, tightly sliding inside said cylindrical body (1b), and operated to move from an idle configuration (I) to an operating configuration.

## Description

This invention relates to the technical field of high viscosity substances, preferably lubricants such as oils and grease, with particular reference to the degassing equipment.

It is well-known that the automated systems are equipped with lubricating points for the lubrication of mechanical parts by means of applying high viscosity substances, such as oils and grease.

These high viscosity substances are commercially available in drums of various quantities, 20, 50, or 200 liters, according to the needs.

They have dissolved and/or included some amounts, which vary at random, of aeriform agglomerates, generally air bubbles.

As far as assembly lines are concerned, where due to necessity lubrication is carried out by "micro dose" applications, it is essential to distribute lubricating oils or grease including a particularly reduced percentage of air bubbles, to avoid frequent rejections of the parts and/or components to be lubricated.

For this reason it is essential to provide, upstream of the applicator, an equipment for degassing the high viscosity substances, that are taken from a commercially available drum, in such a way as to allow the production of high quality finished products.

The traditional degassing systems include a substantially cylindrical container for the high viscosity substances, closed by a removable cover. The cover supports an actuator, whose shaft operates a piston sliding inside the container.

Near its bottom, the container includes a lubricant discharge duct, connected to application member.

The container cooperates with a bell having a complementary section, with which it is set in engagement during the degassing step.

The substantially cylindrical bell includes a stirring member, usually "L"-like and is connected with a depression system.

The working cycle begins with the removal of the container cover together with the actuator and the related piston, so as to fill the container up to 1/3 of its capacity with the desired lubricating substance.

When the filling is completed, the container is hermetically engaged by the bell, so as to allow the stirring member to dip completely into the lubricant.

Then, the stirring member is operated, so as to perform mixed rotation and translation movements in vertical direction in order to separate aeriform substances dissolved and/or contained in the lubricant and release them from the lubricant over the surface thereof.

The depression system is operated in step relation with the stirring member operation, so as to allow the removal of the released aeriform substances, present in the container on the lubricant free surface.

After the degassing step has been completed, the bell, and consequently also the stirring member, are removed from the container, and the container is closed with the cover.

At this point, the piston can be operated by an actuator, e.g. pneumatic jack, or by injecting compressed air, which acts on the piston upper surface.

Thus, the degassed lubricant is made pass through the container discharge duct, which is connected with an applying member, which delivers micro doses of the lubricant.

The traditional degassing equipment presents a substantial drawback, which results from considerable production process slowing down, due to a long time necessary to resume two subsequent recharges of the treated lubricant.

Moreover, this type of equipment requires an operator, who, after having heard an acoustic signal or seen a luminous signal, performs all the manual operations needed to compensate the degassed lubricant in the container, that is, removing of the cover from the container, filling the latter with lubricant, coupling thereof with the bell and closing the cover again.

Moreover, between one working step and another, the lubricant may be contaminated as it is in direct contact with the surrounding working environment, for example during the step preceding the coupling of the tank with the bell and during the one in which the container is uncoupled from the bell and the container is closed with the cover.

Another drawback, also important, is caused by the necessity to change the size of the bell, and consequently, also of the stirring member, in case the container must be substituted with one of bigger capacity, which further increases manpower and reduces productivity.

Moreover, it is not to be forgotten that the described components are very delicate as subject to recurrent stress during working steps, which leads to frequent damage risk.

The main object of the present invention is to avoid the above described drawbacks by proposing an equipment for degassing high viscosity substances, in particular lubricants such as oils and greases, which considerably increases the productivity and drastically reduces the manpower use.

Another object of the present invention is to propose a particularly solid, highly reliable and functional equipment, which degasses in best way without the risk of the high viscosity substances contamination.

Yet another object of the invention is to provide a degassing equipment which keeps environmental pollution as low as possible, in particular when the oil or greasy substance easily vaporizes.

Moreover, the proposed equipment is obtained by a simple and cheap technical solution, which reduces the waste of mechanical parts non properly lubricated.

The above mentioned objects are obtained in accordance with the contents of the claims.

The characteristic features of the present invention will be pointed out in the following description of some preferred, but not only, embodiments, with reference to the enclosed table of drawings, in which:

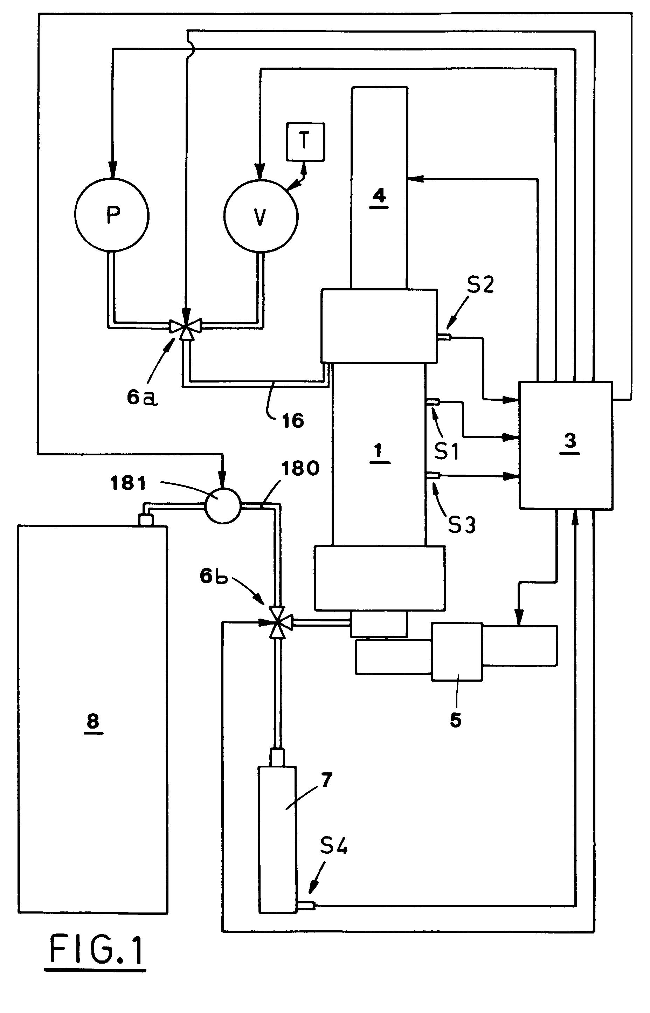

- Figure 1 is a schematic view of a system, which uses the proposed degassing equipment;

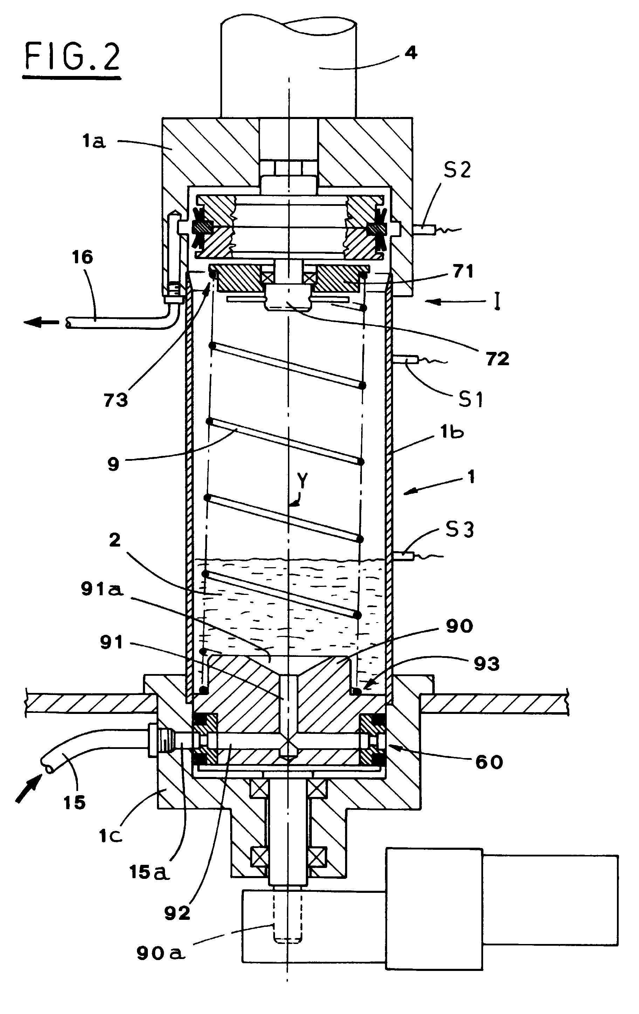

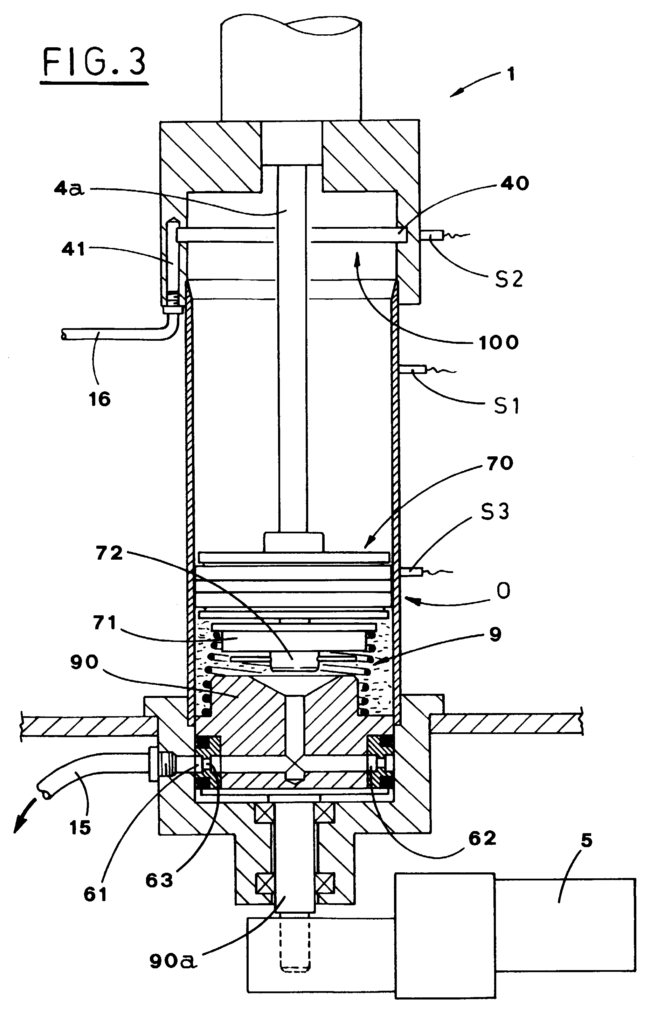

- Figures 2, 3 are schematic lateral section views of two particularly significant working steps of the proposed equipment;

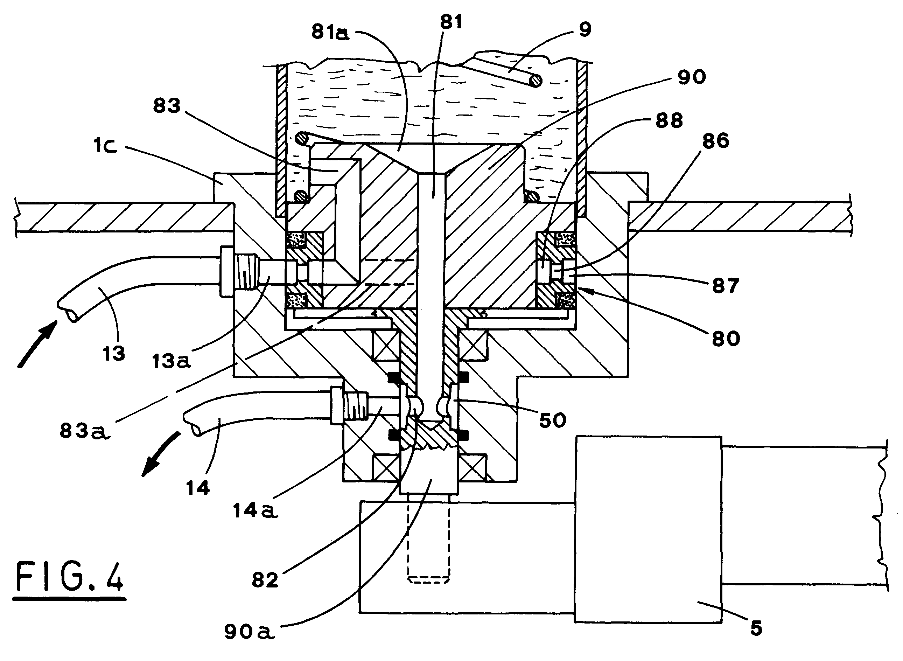

- Figure 4 is an enlarged, schematic view of another embodiment of the proposed equipment.

The embodiments of the present invention, described later on, refer to high viscosity substances 2, which are preferably lubricants, such as oils or greases, however, all high viscosity substances remain within the protective scope of the present invention.

With reference to the above mentioned figures, the reference numeral 1 indicates the proposed equipment for degassing high viscosity substances 2.

The degassing equipment includes a cylindrical body 1b, which contains high viscosity substances 2 and whose upper portion is closed by a head 1a, and whose lower portion is closed by support base 1c.

The external part of the head 1a supports an actuator 4, whose stem 4a operates, on command of a control unit 3, a movable element situated inside the cylindrical body 1b.

The movable element includes substantially a piston 70, which is fastened to the stem 4a of the piston 4 and whose lower part has a projection 72 supporting a plate 71 coaxial therewith.

A recess 100 is made in the head 1a and arranged adjacent to the inner portion of said cylindrical body 1b.

The recess 100 has a ring-like groove 40 connected with a duct 16 via a connecting passage 41 made in the head 1a.

The duct 16 is connected by means of a switch valve 6a, on command of the control unit 3, alternatively to a compressed air source P, e.g. an air compressor, controlled by the control unit 3, and to a vacuum source V, also controlled by the control unit 3 and operated on command by a sensor S2, for a predetermined period of time, which can be regulated by means of a timer T.

The sensor S2, operating the vacuum source V, is situated in the region of the recess 100, made in the head 1a, near the ring-like groove 40.

A rotating drum 90, whose head diameter is smaller than the inner diameter of the body 1b, is inserted into the cylindrical body 1b.

The drum 90 forms an axis 90a, supported by the base 1c and operated by a gear motor 5, which is situated outside of the base 1c and controlled by the control unit 3.

The drum 90 includes an axial duct 91, connected to a frusto-conical seat 91a, which opens near the upper surface of the drum 90 communicating with a plurality of radial channels 92.

The radial channels 92 cooperate with a distributor ring 60, which has a first ring-like chamber 62, into which the radial channels 92 open.

The distributor ring 60 includes also a second ring-like chamber 61, concentric with the first chamber 62 and connected thereto by a plurality of radial bores 63.

The second ring-like chamber 61 communicates with a radial hole 15a made in the base 1c and opening in a channel 15 outside of the base 1c.

A switch valve 6b, controlled by the control unit 3, connects the channel 15 alternatively to a feeding duct 180 and to a container 7.

The feeding duct 180 includes pump means 181, whose aspiration inlet is connected to a barrel 8 containing a non degassed high viscosity substance 2.

The container 7, aimed at receiving the degassed high viscosity substance 2, is equipped with a sensor S4, which detects the maximum level of the substances contained therein.

The drum 90, eccentric with respect to its rotation axis Y, drives elastic stirring means 9 to rotate inside the cylindrical body 1b.

The elastic stirring means 9, e.g. a helical spring of reducible size and a suitable elastic strain, set fixedly in abutment against a ring-like shoulder 93.

The helical spring 9 is eccentric with respect to the drum 90 rotation axis Y and is rotatably connected with the plate 71, and is set fixedly in abutment against a ring-like shoulder 73 formed by the plate 71.

Operation of the of the proposed equipment will be described in the following, beginning from a situation, in which the cylindrical body 1b does not contain the high viscosity substance 2, e.g. oil or grease and the movable element is in an operative configuration O, near the drum 90, with the switch valve 6b connecting the channel 15 with the feeding duct 180.

In order to convey the non degassed high viscosity substance from the barrel 8 to the cylindrical body 1b, the operator acts on the control panel, not shown, so as to operate the control unit 3, which commands the pump means 181.

The control unit 3 operates the gear motor 5 in phase relation with the pump means 181 operation, so that the drum 90 and the spiral spring 9 supported thereby are driven into rotation.

The high viscosity substance 2 passes through the radial hole 15a and the distributor ring 60, then through the radial channels 92 up to the axial duct 91, and flows into the cylindrical body 1b through the truncated cone seat 91a.

The grease 2, passing through the cylindrical body 1b due to the pump means 181 pushing action and subject to the stirring action of the spring 9, forces the movable element to go upwards.

The drum 90 rotation, which pulls the spring 9, together with the spring eccentricity with respect to the drum 90 axis and with the drum 90 eccentricity with respect to its rotation axis Y, generate mixing action, which facilitates the separation of the aeriform agglomerates, e.g. air bubbles, from the grease 2 contained in the cylindrical body 1b.

The grease 2 is added from the barrel 8, commanded by a sensor S1, until the maximum level is reached (variable and usually equal to about 1/3 of the cylindrical body maximum capacity).

Afterwards, the control unit 3 deactivates the pump means 181 and operates the actuator 4.

The actuator 4 allows to raise the movable element until it reaches its idle configuration I, i.e. is wholly introduced into the recess 100.

In phase relation with the reaching of the idle configuration I by the movable element, the control unit 3, commanded by the sensor S2, maintains the actuator 4 in its position and then operates the switch valve 6a, so as to connect the duct 16 to the vacuum source V.

Thus, the vacuum source V is connected with the connecting passage 41 and with the recess 100, by the ring-like groove 40.

The vacuum source V sets in depression the recess 100 and the communicating part of the cylindrical body 1b over the grease 2 surface for a period of time predetermined by the timer T, thus allowing the removal of the aeriform agglomerates released by the action of the spring 9.

In phase relation with the deactivating of the vacuum source V, due to the timer T release, the control unit 3 deactivates the gear motor 5 and inverts the action of the actuator 4, so as to allow the movable element to go downward gradually, until it reaches the grease 2 surface and stays there.

When the operator wants to fill the container 7, he acts on the control panel, not shown, so that the control unit 3 operates the switch valve 6a to set the compressor P in communication with the duct 16 and operates the compressor P, which is thus connected with the recess 100.

In phase relation with the compressor P operating, the control unit 3 activates the commutation of the switch 6b, so as to connect the channel 15 with the container 7.

The piston 70 of the movable element is subjected to the combined action of the actuator 4 and the compressed air generated by the compressor P, so that the movable element goes downwards.

According to a possible variation of the operation, the movable element can be pushed downwards only by the action of the actuator 4, without any inlet of air under pressure.

This allows a simplified configuration of the equipment.

While the projection 72 of the movable element is gradually moving close to the drum 90, the degassed grease 2 is pushed and flows through the truncated cone seat 91a, first to the axial duct 91, then to the radial channels 92 up to the first and second ring-like chambers 61, 62.

Downstream of the second ring-like chamber 62, the degassed grease 2 flows first into the radial hole 15a and then into the channel 15 and container 7, since the switch valve 6b prevents the grease 2 from passing through the feeding duct 180.

The flow process continues, commanded by the sensor S4, situated in the container 7, until the cylindrical body 1b is run out of the degassed grease 2, commanded by the sensor S3, i.e. with the movable element in the operative configuration O.

If the container 7 capacity allows it to be filled before the cylindrical body 1b is completely emptied, the sensor S4 operates the control unit 3, which operates the switch valve 6b, so as to block the flow of the degassed grease 2 to the container 7.

Therefore, the compressor P is deactivated by the control unit 3 on the sensor S4 command, if the container 7 capacity is not enough to receive all the degassed grease 2 from the cylindrical body 1b, or on the sensor S3 command, which detects the lowermost point of the movable element stroke.

The grease 2, which remains in the cylindrical body will be used in the subsequent working cycle, thus reducing the amount of non degassed grease 2 taken from the barrel 8.

The working cycle repeats in the above described way.

According to another advantageous embodiment, the drum 90 includes two circuits, a first circuit only for the outflow of the degassed grease 2 from the cylindrical body 1b, and a second circuit, only for the inflow of the non degassed grease 2 from the barrel 8.

The first circuit includes an axial duct 81, which is connected to a relative truncated cone seat 81a opening into the upper head of the drum 90.

The axial duct 81 communicates with a plurality of radial channels 82.

The radial channels 82 open into a first distributor ring groove 50 connected to a first pipe 14 by a hole 14a made in the equipment support base 1c.

The first pipe 14 is connected to a container 7 containing degassed grease 2.

The second circuit includes a "C"-like pipe 83, whose barycenter is situated at a higher level with respect to the radial channels 82.

One of the ends of the C"-like pipe 83 opens into the cylindrical body 1b and the other into a second distributor ring groove 80.

The second distributor ring groove 80 is connected to a second pipe 13 by a second hole 13a made in the equipment support base 1c.

The second pipe 13 is connected to a feeding duct 180, which features pump means 181 connected to a barrel 8 containing a non degassed grease 2.

The second distributor ring groove 80 includes two concentric ring-like chambers, third 87 and fourth 88, connected with one another by a plurality of radial channels 86, similarly to the already described distributor ring 60.

The first distributor ring groove 50 includes only one ring-like chamber.

According to a further advantageous embodiment, the second circuit can include a joining pipe 83a, arranged with radial axis, connected to the axial duct 81 and communicating with the second distributor ring groove 80.

The above described embodiments of the equipment for degassing high viscosity substances allow to reduce drastically the manpower and to increase considerably the working cycle productivity, without lowering the final product quality.

The proposed equipment allows to eliminate all the manual procedures which slow down the working cycle, and create a risk to contaminate the already degassed high viscosity substances.

The substantially metallic structure of the cylindrical body, head and support base, together with the gear motor compactness make the equipment particularly solid, which leads to high reliability and functionality.

The container for degassed high viscosity substances can be made of any material which assures best reliability and is suitable for the needs.

Moreover, the container can have any geometrical form, which allows to optimize its working functionality.

The container can have a variable capacity and is usually connected to the switch by quick couplings.

Actually, a different container size does not affect the correct functioning of the degassing equipment, since the container is equipped with a sensor, which detects when the container reaches the maximum capacity and blocks the high viscosity substances flow thereinto.

The working cycle simplicity and sturdiness of the used elements considerably increase the productivity and improve its quality.

As has been already said, the high viscosity substances degassed by the proposed equipment are not necessarily only lubricants, which have been referred to in the described embodiments as a pure example, but all the substances of a determined viscosity, which need to be degassed in order to be used in automatic processes.

It is also to be pointed out that the elements of the above described equipment are few and simple to manufacture, what leads to a considerable cost reduction.

## Claims

1. Equipment for degassing high viscosity substances, in particular lubricants such as oils and greases, *characterised in that* it includes:
a cylindrical body (1b), aimed at containing said high viscosity substances (2), tightly closed in the upper portion by a respective head (1a) and in the lower portion by a respective support base (1c);
a rotating drum (90), inserted into said cylindrical body (1b) in the region of said base (1c), whose axis (90a) is operated, when controlled by a control unit (3), by a gear motor (5);
conveying means, connected to said rotating drum (90), aimed at regulating the inflow and/or outflow of high viscosity substances (2) to and/or from said cylindrical body (1b);
elastic stirring means (9), having reducible size, situated in said cylindrical body (1b) and driven into rotation by said drum (90), said elastic stirring means (9) being aimed at freeing and/or extracting aeriform agglomerates from said high viscosity substances (2) as a consequence of said rotation;
a vacuum source (V) communicating, when controlled by said control unit (3), with a duct (16) opening into a recess (100), made in said head (1a) and arranged adjacent to the inner portion of said cylindrical body (1b), with said recess (100) being aimed at removing said aeriform agglomerates released and/or extracted by said stirring means (9);
a movable element, tightly sliding inside said cylindrical body (1b), rotatably connected with said elastic stirring means (9), and operated, in phase relation with the stop of said drum (90), to move from an idle configuration (I), wherein it is freely inserted into said recess (100), to an operating configuration (O), wherein it is close to said drum (90), with a compression effect, as a consequence of the downward movement of said movable element, of the high viscosity substance (2) contained into said cylindrical body (1b), and consequent outflow thereof from said cylindrical body (1b), through said conveying means.

2. Equipment, according to claim 1, characterised in that said conveying means include at least one axial duct (91) made in said drum (90) and opening into said cylindrical body (1b) near the upper head thereof, said axial duct (91) communicating with a plurality of radial channels (92) which cooperate with distributing means (60) made in said drum (90), into which a channel (15) opens, said channel (15) being connected to a switch member (6b) which connects said channel (15), controlled by the control unit (3) alternatively to a feeding duct (180) and to a container (7), with said feeding duct (180) being equipped with pump means (181), whose suction inlet is connected to a barrel (8) containing non degassed high viscosity substances (2) and with said container (7) containing degassed high viscosity substances (2).

3. Equipment, according to claim 1, characterised in that said conveying means include:
a first circuit including at least one axial duct (81), made in said drum (90) and opening in the region of said upper head thereof, said axial duct (81) communicating with a plurality of radial channels (82), made in said drum (90) and opening into first distributor means (50) made in said drum (90);
a second circuit including a "C"-like pipe (83), made in said drum (90), whose barycenter is situated at a higher level with respect to the radial channels (82), the ends of said "C"-like pipe (83) opening respectively into said cylindrical body (1b) and into second distributor means (80) made in said drum (90);
a first bore (14) opening into said first distributor means (50) and connected to a container (7) containing degassed high viscosity substances (2);
a second bore (13) opening into said second distributor means (80) and connected to a feeding duct (180), with said feeding duct (180) being equipped with pump means (181), whose aspiration is connected to a barrel (8) containing non degassed high viscosity substances (2).

4. Equipment, according to claim 2, characterised in that said distributing means (60) include a first ring-like chamber (62), into which said radial channels (92) open, and which is connected to a second ring-like chamber (61), concentric therewith, by a plurality of radial bores (63) and in that said equipment includes a radial hole (15a), which is made in said support base (1c) and connects said channel (15) with said second ring-like chamber (61).

5. Equipment, according to claim 3, characterised in that each of said distributor means, first (50) and second (80) includes at least one ring-like chamber.

6. Equipment, according to claim 1, characterised in that said movable element includes a piston (70), whose upper part is fastened to the stem (4a) of the actuator (4), said actuator (4) being supported by said head (1a), and with the lower part of said piston (70) forming a projection (72) rotatably supporting a plate (71), which goes in abutment against said elastic stirring means (9).

7. Equipment, according to claim 6, characterised in that it includes a ring-like shoulder (73), formed by the plate (71), against which one end of said elastic stirring means (9) goes in irremovable abutment.

8. Equipment, according to claim 1, characterised in that it includes a ring-like shoulder (93), formed by said drum (90), with which one end of said elastic stirring means (9) is fixedly connected.

9. Equipment, according to claim 1, characterised in that said elastic stirring means (9) include a helical spring.

10. Equipment, according to claim 1, characterised in that it includes a connecting passage (41), situated in the region of said head (1a) and connected to said duct (16), said connecting passage (41) communicating with said recess (100) by a ring-like groove (40) made in the head (1a).

11. Equipment, according to claim 1, characterised in that it includes a switch valve (6a), situated in correspondence to said duct (16) and aimed at connecting said duct (16), under control of the control unit (3), alternatively to said vacuum source (V), in phase relation with said gear motor (5) operation, and to a compressed air source (P), in phase relation with filling of a container (7) containing degassed high viscosity substances (2), so as to facilitate the degassed high viscosity substances (2) compression and their outflow.

12. Equipment, according to claim 2 or 3, characterised in that it includes a sensor (S1), situated in said cylindrical body (1b) and aimed at detecting the maximum level of said high viscosity substances (2) during withdrawing thereof from a barrel (8) and consequently, at deactivating said pump means (181), said sensor (S1) being connected to said control unit (3).

13. Equipment, according to claim 1, characterised in that it includes a sensor (S2), situated near said recess (100) and aimed at detecting the utmost point of said movable element raising stroke and at operating, under control of said control unit (3) said vacuum source (V).

14. Equipment, according to claim 1, characterised in that it includes sensor (S3), situated near said cylindrical body (1b) and aimed at detecting the lowermost point of said movable element stroke.

15. Equipment, according to claim 2 or 3, characterised in that it includes a sensor (S4) situated near said container (7) and aimed at detecting the maximum level of said degassed high viscosity substances (2) during their adding to said container (7), with said sensor (S4) connected with the control unit (3).

16. Equipment, according to claim 1, characterised in that said elastic stirring means (9) are eccentric with respect to drum (90) rotation axis (Y).

17. Equipment, according to claim 1, characterised in that the diameter of said drum (90) head is smaller than the diameter of said cylindrical body (1b) and that said drum (90) head is eccentric with respect to drum (90) rotation axis (Y).

18. Equipment, according to claim 1, characterised in that said conveying means include:
a first circuit including at least one axial duct (81), made in said drum (90) and opening in the region of said upper head thereof, said axial duct (81) communicating with a plurality of radial channels (82), made in said drum (90) and opening into first distributor means (50) made said drum (90);
a second circuit including a joining pipe (83a) of radial axis, made in said drum (90) and connected with said axial duct (81) and communicating with second distributor means (80) made in said drum (90);
a first pipe (14) opening into said first distributor means (50) and connected to a container (7) for containing degassed high viscosity substances (2);
a second pipe (13) opening into said second distributor means (80) and connected to a feeding duct (180), with said feeding duct (180) being equipped with pump means (181), whose suction inlet is connected to a barrel (8) containing non degassed high viscosity substances (2).

19. Equipment, according to claim 3 or 18, characterised in that said second distributor means (80) include a third ring-like chamber (87), which is connected to a fourth ring-like chamber (88), concentric therewith, by a plurality of radial channels (86).

20. Equipment, according to claim 2, characterised in that it includes a frusto-conical cone seat (91a), made in said drum (90) and connected with said axial duct (91) and opening near said drum (90) upper head.

21. Equipment, according to claim 3 or 18, characterised in that it includes a frusto-conical cone seat (81a) made in said drum (90) and connected with said axial duct (81) and opening near said drum (90) upper head.

22. Equipment, according to claim 13, characterised in that it includes a timer (T) which determines said vacuum source (V) operation time.

23. Equipment, according to claim 11, characterised in that the inflow of said degassed high viscosity substances (2) to said container (7) is determined by the combined action of compressed air delivered by said compressed air source (P) and of an actuator (4) supported by said equipment (1) on said movable element, with the stem (4a) of the actuator (4) being connected to said movable element.

24. Equipment, according to claim 11, characterised in that the inflow of said degassed high viscosity substances (2) to said container (7) is determined by the action of an actuator (4) supported by said equipment (1) on said movable element, with the stem (4a) of the actuator (4) being connected to said movable element.
